# EUROPEAN PATENT SPECIFICATION

(11) **EP 2 946 097 B1**
(45) Date of publication and mention of the grant of the patent: **30.11.2016**
(21) Application number: 14703104.1
(22) Date of filing: 15.01.2014
(51) Int. Cl.: F02D 19/06, F02M 63/02, F02M 43/04, F02D 19/10

(54) **A FUEL SYSTEM FOR A GAS OPERATED INTERNAL COMBUSTION PISTON ENGINE**
KRAFTSTOFFSYSTEM FÜR EIN VERBRENNUNGSMOTOR MIT GASFÖRMIGEN BRENNSTOFF
SYSTÈME DE CARBURANT POUR UN MOTEUR À COMBUSTION INTERNE UTILISANT UN CARBURANT GASOUS

(30) Priority: 16.01.2013 FI 20135048
(43) Date of publication of application: 25.11.2015
(73) Proprietor: Wärtsilä Finland Oy, 65380 Vaasa (FI)
(72) Inventor: JAY, David, FI- 66500 Vähäkyrö (FI)
(74) Representative: Genip Oy
(86) International application number: PCT/FI2014/050024
(87) International publication number: WO 2014/111623

(56) References cited:
- EP-B1- 1 586 758
- WO-A1-2011/162681
- DE-A1-102012 012 450

## Description

### Technical field

Invention relates to a fuel system for a gas operated internal combustion piston engine comprising a gaseous fuel feeding system, a first liquid fuel feeding system and a second fuel feeding system, and a number of first fuel admission systems for introducing liquid fuel into combustion chambers of the engine, belonging to and being in connection with the first liquid fuel feeding system, and a number of second fuel admission systems for introducing liquid fuel into the combustion chamber, belonging to and being in connection with the second liquid fuel feeding system according to preamble of claim 1.

### Background art

Gas is used to an increasing extent as fuel in internal combustion piston engines. Particularly natural gas is widely used due to its availability and low exhaust emissions.

Typically, the gaseous fuel used as main fuel in a piston engine is fed into the combustion chamber of the engine mixed with air so that the gas pressure need not be so high. The gas is ignited by injecting a very small amount of ignition fuel, also called as pilot fuel, which is ignited due to the conditions existing in the combustion chamber and thereby also ignites the gaseous fuel. In this case, as far as the gaseous fuel is concerned, the engine is run according to the Otto process. Conventionally, the ignition fuel is liquid fuel and is injected using a common rail fuel injection system using light fuel oil (LFO) or marine fuel oil (MFO). The common rail fuel injection system is advantageous because it allows the ignition process to be controlled so that the exhaust gas composition is favorable with respect to emission concentrations.

In in an engine used as power generation is a marine vessel or in power plant, the fuel feeding system must meet special requirements in order to assure safety and reliability. The most important such requirement is that unexpected shut down of the engine cannot be allowed under any circumstances. Because of this, a gas engine typically provided with a backup fuel feeding system based on using only liquid fuel. Typically the backup fuel feed system is hydromechanically controlled because hydromechanical, conventional fuel feed systems are highly reliable. In case there is a malfunction e.g. in the pilot fuel feeding system affecting running of the engine, the engine transfers from running on gaseous fuel as the main fuel and using liquid pilot fuel supplied to running only on liquid fuel supplied by a hydromechanical fuel feed system. So, typically a large gas engine used in power generation is provided with two liquid fuel injection systems.

When operating in so called gas mode using gas as the main fuel and liquid fuel as the pilot fuel the engine operates according to otto process, and when operated with liquid fuel only the engine run according to the Diesel process using liquid fuel as the main fuel, because of which the operation with liquid fuel only i.e. main liquid fuel is often referred to as diesel mode.

Now, during the operation in diesel mode the consumption of liquid fuel is typically more than hundred times the consumption during operating in gas mode. Therefore, due to economic reasons heavy fuel oil (HFO) has been commonly used for operating such engine in diesel mode. This in turn, has in conventional gas engines led to using two separate fuel delivery systems, including tanks, delivery pipings, pumps, injectors etc. for heavy fuel oil used in diesel mode and on the other hand for pilot fuel, which has been typically been light fuel oil (LFO). This may be considered to be a drawback to some extent making the fuel system as a whole technically complicated and space consuming.

In EP 1275840 A2 there is shown a directly controlled dual concentric needle injector by means of which a different amount of fuel may be injected so that the inner and the outer needles are arranged to open at different control pressure. A drawback in this solution is that the operation of the needles is not totally independent.

US7556017 B2 discloses a fuel injector in which separate first and second nozzles are arranged in the injector body in order to be able to provide different spray pattern at different operational situations of the engine. The nozzles are arranged to inject fuel supplied from a common source. The nozzles are also arranged to common space in the injector.

Both of the publications EP 1275840 A2 and US7556017 B2 rely on using a common fuel feeding system for both of the nozzles in the injector.

EP1586758 B1 discloses a gas engine which comprises a gaseous fuel feed system, a first liquid fuel feed system and a second liquid fuel feed system having separate injectors in each cylinder of the engine, the use of which can be alternated for running the engine in various operation modes. In the first operation mode of the engine the engine is run by introducing gaseous fuel into the combustion air of the engine, whereby the gaseous fuel is ignited by injecting first liquid fuel into the mixture of combustion air and gaseous fuel. The engine can be run in the second operation mode, in which the engine is run by still introducing gaseous fuel into the combustion air of the engine and the gaseous fuel is ignited by injecting second liquid fuel into the mixture of combustion air and gaseous fuel. Document further discloses that the fuel for both liquid fuel feed systems is in a common tank suggesting that the fuel feed system may share a common fuel source.

In WO 2012/079718 A1 there is shown a fuel feeding system for a gas engine in which both the pilot fuel and the main liquid fuel use a common fuel system except that there are separate fuel injectors for pilot fuel and main liquid fuel in each cylinder. The injectors are arranged to receive fuel from a common rail. In this kind of solution in which a common fuel rail is used for pilot fuel and main liquid fuel there are operational challenges because in practice the pilot fuel injection pressure is about half of the injection pressure of the main liquid fuel during the diesel mode. Thus, the rail pressure must be changed during the changeover from gas mode to diesel mode and vice versa

Also, in such a solution the positions of the injectors in the combustion chamber are not necessarily optimal in respect to the combustion process, at least in respect to both gas mode and diesel mode, since both injectors reserves quite much space in the cylinder head of the engine. This is also a fact that must be considered when designing the piston top.

It is an object of the present invention to provide a fuel system for a gas engine which solves at least one of the problems of the prior art.

### Disclosure of the Invention

The characterizing features of the fuel injection unit according to the present invention are given in the characterizing part of claim 1.

A fuel system for a gas operated internal combustion piston engine according to the invention comprises a gaseous fuel feeding system, a first liquid fuel feeding system and a second fuel feeding system, and a number of first fuel admission systems for introducing liquid fuel into combustion chamber of the engine, belonging to and being in connection with the first liquid fuel feeding system, and a number of second fuel admission systems for introducing liquid fuel into the combustion chamber, belonging to and being in connection with the second liquid fuel feeding system. In the fuel system the first liquid fuel admission system and the second liquid fuel admission system for one combustion chamber are arranged into a single liquid fuel injector having fuel channels separated from each other.

According to an embodiment of the invention the first and the second liquid fuel feeding system share a common fuel source. Advantageously the liquid fuel feeding system have been adapted to operate with heavy fuel oil.

When operating in the gas mode gas is used as the main fuel and liquid fuel as the pilot fuel to ignite the gas, and when operated with liquid fuel only the engine run using liquid fuel as the main fuel. According the invention the engine is operated with liquid fuel only using diesel cycle and therefore the operation with main liquid fuel may be referred to as diesel mode as well.

According to an embodiment of the invention the first liquid fuel feeding system and the second liquid fuel feeding system comprise separate, and separately controllable dedicated common rail systems.

According to an embodiment of the invention the first liquid fuel feeding system and the second liquid fuel feeding system comprise a common pump, a control device and a control system arranged to maintain the fuel pressure in the first common rail system at a first set value, and in the second common rail system at a second set value.

According to an embodiment of the invention the first common rail system comprises a pump and /or control system arranged to maintain the fuel pressure in the first common rail system at a first set value.

According to an embodiment of the invention the second common rail system comprises a pump and /or control system arranged to maintain the fuel pressure in the second common rail system at a second set value.

According to an embodiment of the invention the fuel system comprises a control system arranged to maintain the fuel pressure in the second common rail system at a second set value being twofold to the first set value.

According to an embodiment of the invention the first liquid fuel feeding system comprise a common rail system and the second liquid fuel feeding system comprises a hydro-mechanical nozzle including a spring-loaded nozzle needle which may be opened by applying force of fuel pressure against the spring urging the needle towards its closed position, and a dedicated injection jerk pump.

According to an embodiment of the invention the first and the second liquid fuel feeding system are branched at the common fuel source.

According to an embodiment of the invention the fuel admission systems comprises a nozzle having a needle valve, in which a needle is provided with a guiding section having cylindrical outer surface, and that the outer surface is provided with radially extending groove.

According to an embodiment of the invention the guiding section is provided with at least one threaded groove.

According to an embodiment of the invention the guiding section part is provided with at least a double threaded groove.

According to an embodiment of the invention the guiding section is provided with radially circumscribing groove with longitudinal connecting groove.

According to an embodiment of the invention the guiding section is provided with a counter threaded groove.

According to an embodiment of the invention the groove has a depth L of 15 - 20 µm and there is the clearance between the outer surface and the cylindrical cavity it is installed in of 3-5 µm.

### Brief Description of Drawings

In the following, the invention will be described with reference to the accompanying exemplary, schematic drawings, in which
Figure 1 illustrates a fuel system for a gas operated engine according to an embodiment of the invention,
Figure 2 illustrates a liquid fuel feeding system for a gas operated engine according to an embodiment of the invention,
Figure 3 illustrates a liquid fuel feeding system for a gas operated engine according to another embodiment of the invention,
Figure 4 illustrates a fuel system for a gas operated engine according to another embodiment of the invention, and
Figure 5 a) - d) illustrates embodiments of a detail of a control needle valve in a liquid fuel injector according to the invention.

### Detailed Description of Drawings

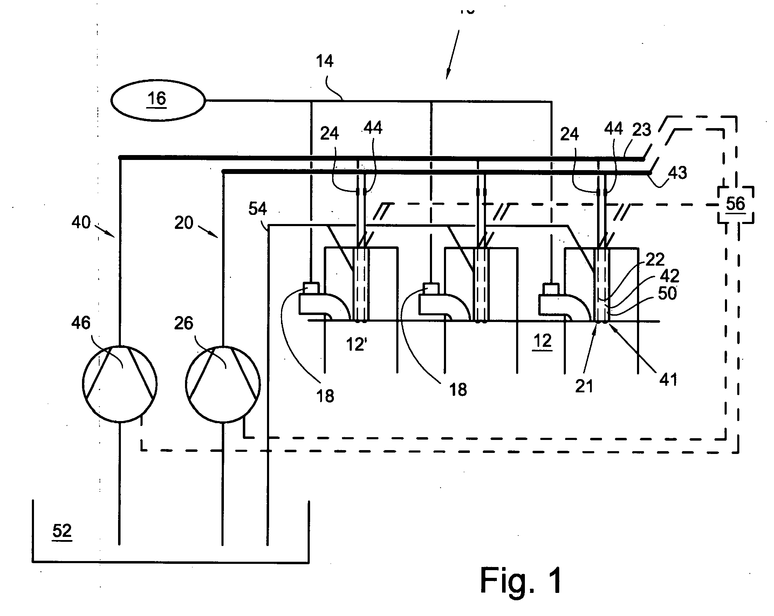

Figure 1 depicts schematically a fuel system 10 for a gas operated engine 12 shown in connection with three cylinders and cylinder heads thereof. The fuel system comprises a gaseous fuel feeding system 14 which in this embodiment comprises a source of gaseous fuel 16 which is in connection with a gas admission valve 18 arranged for each cylinder of the engine. In this embodiment the gas admission valve is in connection with and inlet gas channel.

The fuel system comprises also a first liquid fuel feeding system 20 and a second fuel feeding system 40. There is also a liquid fuel admission system 21, 41 arranged for both the first and the second fuel feeding system in each cylinder of the engine. The fuel admission systems belong to and are in connection with the respective liquid fuel feeding system. In other words in a multi cylinder engine there is a number of first fuel admission systems 21 arranged for introducing liquid fuel into combustion chambers of the engine, and a number of second fuel admission systems 41 arranged for introducing liquid fuel into the combustion chamber 12' each cylinder. In connection with liquid fuel feeding system the fuel admission system comprises a control needle which is arranged to control the admission of fuel in to the combustion chamber. In the fuel system according to the invention there is one liquid fuel injector 50 which is provided with two control needles 22, 42, in other words the first fuel admission system and the second fuel admission system for one combustion chamber are arranged into a single liquid fuel injector. The fuel admission systems are separate to each other in terms of fluid flow at their pressure sides (feeding side) i.e. fuel spaces are not in flow connection with each other in the injector. This way when installed to an engine there is only one injector per cylinder of the engine, which is beneficial in many aspects. For example the construction of the cylinder head is less complicated.

Both the first liquid fuel feeding system 20 and the second fuel feeding system 40 are provided with a dedicate fuel rail 23, 43 i.e. accumulator. Even if not shown the accumulator may be a single unit or it may consist of several units connected with each other. This way it is possible to maintain different pressures in the rails 23, 43 so that the pressure in each accumulator is suitably or optimal for the intended use of the fuel therein.

During operating the engine gas mode the pressure in the second accumulator 43 is maintained at predetermined idle pressure which is smaller than its operating pressure, but still so that the operational pressure may be reached quickly enough for changing the operation mode of the engine. Each control needle 22, 42 is connected to the respective fuel rail 23, 43 via a flow fuse 24, 44 arranged between the needle and the rail. The flow fuse is a device which allows only a certain predetermined amount of fuel to flow during a single injection and should a needle to remain leaking the flow fuse will prevent the flow. Each of the rails 23, 43 is separately connected to a common fuel source 52 though a high pressure pump 26, 46. Even if not shown all of the figure the fuel feeding systems 20, 40 are also provided with a low pressure pump 26', 46'. The pressure in the rail is controlled by controlling the high pressure pumps. Sharing the same fuel source e.g. fuel tank, means in practice that both the first liquid fuel feeding system 20 and a second fuel feeding system 40 utilized same fuel which is beneficial particularly in marine vessel where such a solution saves considerably space and makes operation easier than using separate fuel. The first and the second liquid fuel feeding system preferably are branched at the common fuel source and are totally separate in fluid point of view at the pressure sides thereof until the combustion chamber of the engine. This way the operating of the two fuel systems and their construction may be arranged to serve the particular demands of their actual use as a pilot fuel feeding system or main liquid fuel feeding system, respectively. As is shown in figure 1 the nozzles share also a common fuel return channel 54 through which a portion of the fuel may be returned to the tank 52.

The first fuel feeding system is arranged for injecting the pilot fuel, i.e. ignition fuel use in gas mode while the second fuel feeding system is arranged for main liquid fuel use in diesel mode. The injection amount of the first fuel is less that the main liquid fuel and therefore the fuel admission system 21 for the first fuel is also physically smaller than the fuel admission system 41 for the main liquid fuel. The first and the second fuel admission systems may open into the combustion chamber at different distance from the cylinder head upper surface via injection holes. In order to endure the pressure needed for proper operation of the engine in diesel mode the second fuel feeding system is arranged to endure 1,7-2,5 the-pressure which the fist fuel feeding system is arranged to endure.

Both the first common rail system 23 and the second common rail system 43 comprise a high pressure pump 26, 46 and/or control system 56 arranged to maintain the fuel pressure in the second common rail system at a second set value being twofold to the first set value. Here the control system is shown to be one common system, which refers to the fact that there may be common control device taking care of the control of both the fuel systems, but it is conceivable that there are separate device however communicate with each other to a needed extent. The pressure in each rail is measured and transmitted to the control system 56 which independently controls the operation of the pump 26 and 46 based on the measurement signal and set target pressure value.

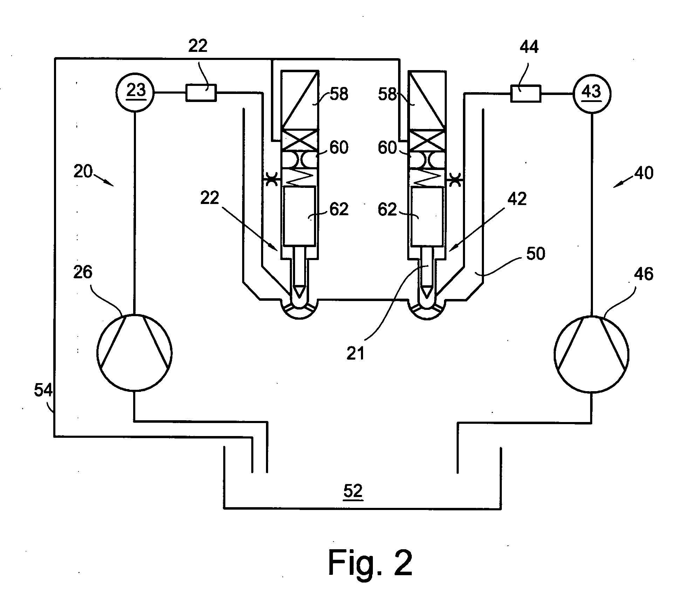

In figure 2 there is shown an embodiment of the first liquid fuel feeding system 20 and the second fuel feeding system 40 in which the liquid fuel injector 50 is shown in more detailed manner. The fuel injector 50 has a body into which the fist 22 and the second fuel admission device 42 are arranged separately. The fuel admission devices 42, 22 are here basically of similar construction but they preferably are designed according to their intended use as injecting pilot fuel and main liquid fuel.. Each of the rails 23, 43 is separately connected to a common fuel source 52 though a high pressure pump 26, 46. Here the fuel feeding systems are also provided with a low pressure pump 26" which is common to the rails 23, 43. The pressure in the rail is controlled by controlling the high pressure pumps. Sharing the same fuel source e.g. fuel tank, means in practice that both the first liquid fuel feeding system 20 and a second fuel feeding system 40 utilized same fuel which is beneficial particularly in marine vessel where such a solution saves considerably space and makes operation easier than using separate fuel. The control needles are operated by the pressurized fuel which has a passage to both sides of a piston 62 in connection with the needle. The pressure of the fuel at the side opposite to the injection end may be released through a valve means 60, which is controlled by an actuator 58. Lowering the pressure above (in the figure) the control needle allows the pressure at the injection end under the needle (in the figure) lift the needle and cause the injection to take place. Closing the pressure releasing connection to the return channel 57 allows the pressure to rise again above the control needle urging the needle back to the closing position. There may be an assisting spring above the needle effecting on the force balance of the control needle in addition to the areas converting the pressure into longitudinal force.

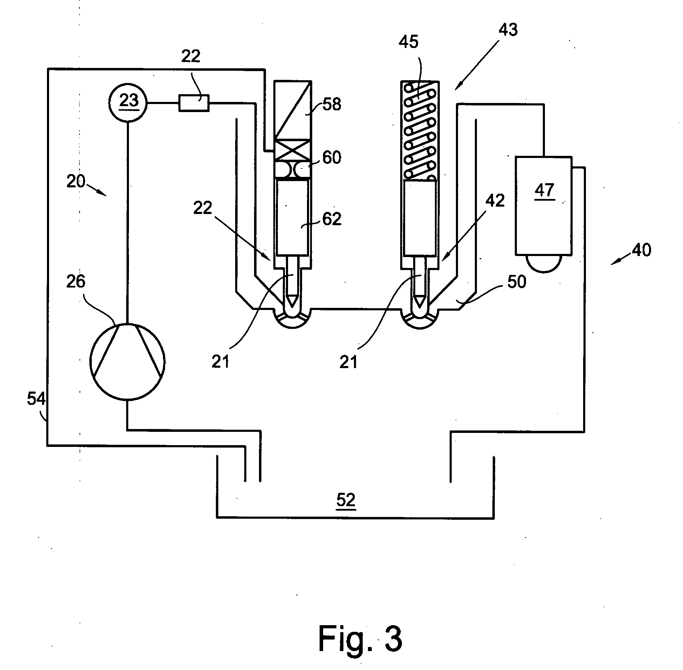

Figure 3 describes an embodiment of the first liquid fuel feeding system 20 and the second fuel feeding system 40 in which the liquid fuel injector 50 has a body into which the fist 22 and the second fuel admission device 42 are arranged separately. The fuel admission device 22 for pilot fuel is here basically of similar construction as in figure 2. Thus the first liquid fuel feeding system comprise a common rail system 23 , 22 and the second liquid fuel feeding system 40 comprises a hydromechanial nozzle 43 including a spring 45 above the nozzle needle which constantly pushes the needle towards its closed position. The nozzle needle may be opened by applying force of fuel pressure against the spring load. Here the fuel system comprises a dedicated injection jerk pump 47 for each hydro-mechanical nozzle 43. The jerk pump 47 may be operated e.g. by a cam shaft 51 of the engine.

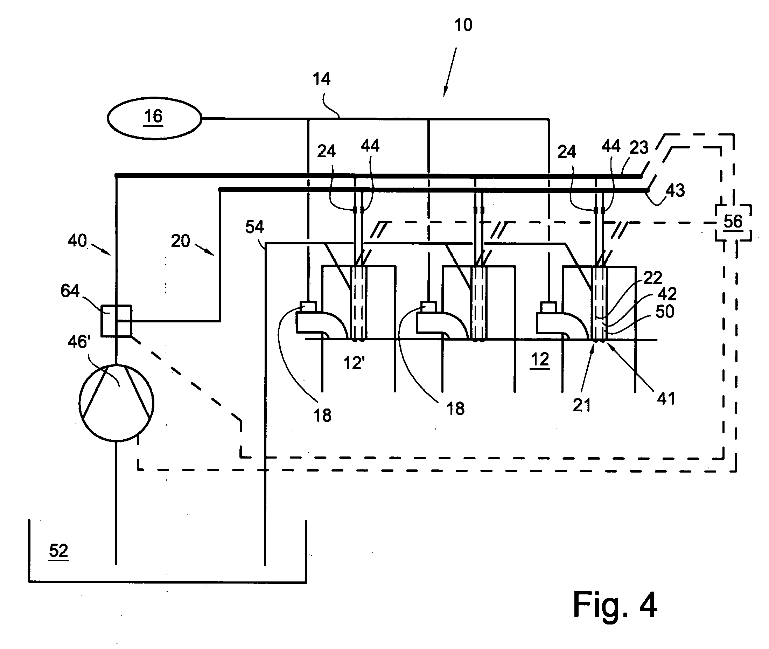

In the figure 4 there is shown an embodiment of the invention which is similar to that of figure 1 with an exception that instead of having separate pumps for the first liquid fuel feeding system and the second liquid fuel feeding system they are provided with a common pump 46' and a control device 64 arranged in the outlet of the pump 46' to maintain the fuel pressure in the first common rail system at a first set value, and in the second common rail system at a second set value. The control device 64 is under control of the control system 56. The second set value is preferably twofold to the first set value.

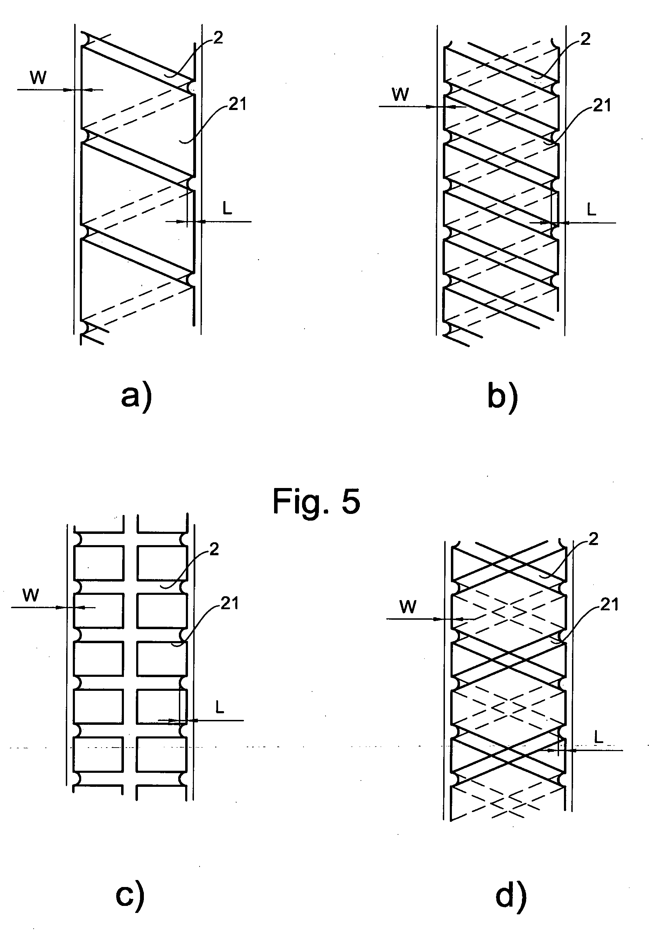

According to an embodiment of the invention the fuel admission systems comprises a nozzle having a control needle valve 22, 44 , in which a needle is provided with a guiding section 43 having cylindrical outer surface, and the outer surface is provided with at least one radially extending microgroove 2. In figure 5 there are shown embodiments of a guiding section having at least one threaded groove 2 in figure 5 a), double threaded grooves 2 in figure 5 b) and radially circumscribing groove 2 with longitudinal connecting groove in figure 5 c) and a counter threaded groove 2 in figure 5 d).

The groove has a depth L of 15 - 20 µm and there is the clearance W between the outer surface and the cylindrical cavity it is installed in of 3-5 µm. The thread is balanced which means that by the effect of the threads positioned suitably around the section it assists to keep the pin centered in and aligned with the bore it is installed in.

By means of these embodiments the operation with particularly with heavy fuel oil (HFO) is improved because they considerably improve the lubrication of the pin minimizing to possibility of sticking or seizure of the needle.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. A fuel system (10) for a gas operated internal combustion piston engine (12) comprising a gaseous fuel feeding system (14), a first liquid fuel feeding system (20) and a second liquid fuel feeding system (40), and a number of first fuel admission systems (21) for introducing liquid fuel into combustion chamber (12') of the engine, belonging to and being in connection with the first liquid fuel feeding system (20), and a number of second fuel admission systems (41) for introducing liquid fuel into the combustion chamber (12'), belonging to and being in connection with the second liquid fuel feeding system (40), **characterized in that** the first liquid fuel admission system (20) and the second liquid fuel admission system (40) for one combustion chamber (12') are arranged into a single liquid fuel injector (50) having fuel channels separated from each other, and that the first and the second liquid fuel feeding system (20, 40) share a common fuel source (52).

2. A fuel system for a gas operated internal combustion piston engine according to claim 1, **characterized in that** the first liquid fuel feeding system (20) and the second liquid fuel feeding system (40) comprise separately controllable, dedicated common rail systems (23, 43).

3. A fuel system for a gas operated internal combustion piston engine according to claim 3, **characterized in that** the first liquid fuel feeding system and the second liquid fuel feeding system comprise a common pump (46'), a control device (64) and a control system (56) arranged to maintain the fuel pressure in the first common rail system (23) at a first set value, and in the second common rail system (43) at a second set value.

4. A fuel system for a gas operated internal combustion piston engine according to claim 3, **characterized in that** the first common rail system comprises a pump (26) and /or control system (56) arranged to maintain the fuel pressure in the first common rail system at a first set value.

5. A fuel system for a gas operated internal combustion piston engine according to claim 3, **characterized in that** the second common rail system comprises a pump (46) and /or control system (56) arranged to maintain the fuel pressure in the second common rail system at a second set value.

6. A fuel system for a gas operated internal combustion piston engine according to anyone of the preceding claims 3 - 6, **characterized in that** the fuel system comprises a control system (56) arranged to maintain the fuel pressure in the second common rail system at a second set value being twofold to the first set value.

7. A fuel system for a gas operated internal combustion piston engine according to claim 1, **characterized in that** the first liquid fuel feeding system comprise a common rail system (23) and the second liquid fuel feeding system comprises a hydro-mechanical nozzle (43) including a spring-loaded nozzle needle which may be opened by applying force of fuel pressure against the spring urging the needle towards its closed position, and a dedicated injection jerk pump (47).

8. A fuel system for a gas operated internal combustion piston engine according to claim 1, **characterized in that** the first and the second liquid fuel feeding system are branched at the common fuel source (52).

9. A fuel system for a gas operated internal combustion piston engine according to claim 1, **characterized in that** the first and the second liquid fuel feeding systems are adapted to be operated with heavy fuel oil.

10. A fuel system for a gas operated internal combustion piston engine according to claim 1, **characterized in that** the fuel admission systems comprises a nozzle having a needle valve, in which a needle is provided with a guiding section (43) part having cylindrical outer surface, and that the outer surface is provided with radially extending groove (2).

11. A fuel system for a gas operated internal combustion piston engine according to claim 10, **characterized in that** the needle guiding section is provided with at least one threaded microgroove (2).

12. A fuel system for a gas operated internal combustion piston engine according to claim 10, **characterized in that** the guiding section is provided with at least a double threaded microgroove (2).

13. A fuel system for a gas operated internal combustion piston engine according to claim 10, **characterized in that** the guiding section is provided with radially circumscribing groove (2) with longitudinal connecting microgroove.

14. A fuel system for a gas operated internal combustion piston engine according to claim 10, **characterized in that** the guiding section is provided with a counter threaded microgroove (2).

15. A fuel system for a gas operated internal combustion piston engine according to anyone of the claims 10 - 14, **characterized in that** the microgroove (2) has a depth L of 15 - 20 µm and there is the clearance W between the outer surface and the cylindrical cavity it is installed in of 3-5 µm.

## Patentansprüche

1. Kraftstoffsystem (10) für eine gasbetriebene Kolben-Verbrennungskraftmaschine (12), das ein Gaskraftstoff-Zufuhrsystem (14), ein erstes Flüssigkraftstoff-Zufuhrsystem (20) und ein zweites Flüssigkraftstoff-Zufuhrsystem (40) und eine Anzahl von ersten Kraftstoff-Zuleitungssystemen (21), um flüssigen Kraftstoff in eine Verbrennungskammer (12') der Kraftmaschine einzuleiten, die zu dem ersten Flüssigkraftstoff-Zufuhrsystem (20) gehören und in Verbindung damit stehen, und eine Anzahl von zweiten Kraftstoff-Zuleitungssystemen (41), um flüssigen Kraftstoff in die Verbrennungskammer (12') einzuleiten, die zu dem zweiten Flüssigkraftstoff-Zufuhrsystem (40) gehören und in Verbindung damit stehen, umfasst, **dadurch gekennzeichnet, dass** das erste Flüssigkraftstoff-Zuleitungssystem (20) und das zweite Flüssigkraftstoff-Zuleitungssystem (40) für eine Verbrennungskammer (12') zu einer einzigen Einspritzvorrichtung (50) für flüssigen Kraftstoff, die voneinander getrennte Kraftstoffkanäle hat, angeordnet sind und dass das erste und das zweite Flüssigkraftstoff-Zufuhrsystem (20, 40) eine gemeinsame Kraftstoffquelle (52) teilen.

2. Kraftstoffsystem für eine gasbetriebene Kolben-Verbrennungskraftmaschine nach Anspruch 1, **dadurch gekennzeichnet, dass** das erste Flüssigkraftstoff-Zufuhrsystem (20) und das zweite Flüssigkraftstoff-Zufuhrsystem (40) gesondert steuerbare, zweckbestimmte Common-Rail-Systeme (23, 43) umfassen.

3. Kraftstoffsystem für eine gasbetriebene Kolben-Verbrennungskraftmaschine nach Anspruch 2, **dadurch gekennzeichnet, dass** das erste Flüssigkraftstoff-Zufuhrsystem und das zweite Flüssigkraftstoff-Zufuhrsystem eine gemeinsame Pumpe (46'), ein Steuergerät (64) und ein Steuerungssystem (56) umfassen, die dafür angeordnet sind, den Kraftstoffdruck in dem ersten Common-Rail-System (23) bei einem ersten Sollwert und in dem zweiten Common-Rail-System (43) bei einem zweiten Sollwert zu halten.

4. Kraftstoffsystem für eine gasbetriebene Kolben-Verbrennungskraftmaschine nach Anspruch 3, **dadurch gekennzeichnet, dass** das erste Common-Rail-System eine Pumpe (26) und/oder ein Steuerungssystem (56) umfasst, die dafür angeordnet sind, den Kraftstoffdruck in dem ersten Common-Rail-System bei einem ersten Sollwert zu halten.

5. Kraftstoffsystem für eine gasbetriebene Kolben-Verbrennungskraftmaschine nach Anspruch 3, **dadurch gekennzeichnet, dass** das zweite Common-Rail-System eine Pumpe (46) und/oder ein Steuerungssystem (56) umfasst, die dafür angeordnet sind, den Kraftstoffdruck in dem zweiten Common-Rail-System bei einem zweiten Sollwert zu halten.

6. Kraftstoffsystem für eine gasbetriebene Kolben-Verbrennungskraftmaschine nach einem der Ansprüche 3 bis 5, **dadurch gekennzeichnet, dass** das Kraftstoffsystem ein Steuerungssystem (56) umfasst, das dafür angeordnet ist, den Kraftstoffdruck in dem zweiten Common-Rail-System bei einem zweiten Sollwert zu halten, der das Zweifache des ersten Sollwertes beträgt.

7. Kraftstoffsystem für eine gasbetriebene Kolben-Verbrennungskraftmaschine nach Anspruch 1, **dadurch gekennzeichnet, dass** das erste Flüssigkraftstoff-Zufuhrsystem ein Common-Rail-System (23) umfasst und das zweite Flüssigkraftstoff-Zufuhrsystem eine hydromechanische Düse (43), die eine federgespannte Düsennadel einschließt, die durch das Ausüben einer Kraft von Kraftstoffdruck gegen die Feder, welche die Nadel zu ihrer geschlossenen Stellung drängt, geöffnet werden kann, und eine zweckbestimmte Einspritzungsdruckpumpe (47) umfasst.

8. Kraftstoffsystem für eine gasbetriebene Kolben-Verbrennungskraftmaschine nach Anspruch 1, **dadurch gekennzeichnet, dass** das erste und das zweite Flüssigkraftstoff-Zufuhrsystem an der gemeinsamen Kraftstoffquelle (52) verzweigt sind.

9. Kraftstoffsystem für eine gasbetriebene Kolben-Verbrennungskraftmaschine nach Anspruch 1, **dadurch gekennzeichnet, dass** das erste und das zweite Flüssigkraftstoff-Zufuhrsystem dafür eingerichtet sind, mit Schweröl betrieben zu werden.

10. Kraftstoffsystem für eine gasbetriebene Kolben-Verbrennungskraftmaschine nach Anspruch 1, **dadurch gekennzeichnet, dass** die Kraftstoff-Zuleitungssysteme eine Düse umfassen, die ein Nadelventil haben, in dem die Nadel mit einem Teil einer Führungssektion (43) versehen ist, der eine zylindrische Außenfläche hat, und dass die andere Außenfläche mit einer sich in Radialrichtung erstreckenden Rille (2) versehen ist.

11. Kraftstoffsystem für eine gasbetriebene Kolben-Verbrennungskraftmaschine nach Anspruch 10, **dadurch gekennzeichnet, dass** die Nadelführungssektion mit wenigstens einer Gewinde-Mikrorille (2) versehen ist.

12. Kraftstoffsystem für eine gasbetriebene Kolben-Verbrennungskraftmaschine nach Anspruch 10, **dadurch gekennzeichnet, dass** die Führungssektion mit wenigstens einer Doppelgewinde-Mikrorille (2) versehen ist.

13. Kraftstoffsystem für eine gasbetriebene Kolben-Verbrennungskraftmaschine nach Anspruch 10, **dadurch gekennzeichnet, dass** die Führungssektion mit einer in Radialrichtung umlaufenden Rille (2) mit in Längsrichtung verbindender Mikrorille versehen ist.

14. Kraftstoffsystem für eine gasbetriebene Kolben-Verbrennungskraftmaschine nach Anspruch 10, **dadurch gekennzeichnet, dass** die Führungssektion mit einer Gegengewinde-Mikrorille (2) versehen ist.

15. Kraftstoffsystem für eine gasbetriebene Kolben-Verbrennungskraftmaschine nach einem der Ansprüche 10 bis 14, **dadurch gekennzeichnet, dass** die Mikrorille (2) eine Tiefe L von 15 bis 20 µm hat und dass es einen Freiraum W zwischen der Außenfläche und dem zylindrischen Hohlraum, in dem sie installiert ist, von 3 bis 5 µm gibt.

## Revendications

1. Système de carburant (10) pour un moteur à pistons à combustion interne fonctionnant à l'essence (12) comprenant un système d'alimentation en carburant gazeux (14), un premier système d'alimentation en carburant liquide (20) et un second système d'alimentation en carburant liquide (40) et des premiers systèmes d'admission de carburant (21) pour introduire du carburant liquide dans la chambre de combustion (12') du moteur, appartenant à et étant reliés au premier système d'alimentation en carburant liquide (20), et des second systèmes d'admission de carburant (41) pour introduire du carburant liquide dans la chambre de combustion (12'), appartenant à et étant reliés au second système d'alimentation en carburant liquide (40), **caractérisé en ce que** le premier système d'alimentation en carburant liquide (20) et le second système d'alimentation en carburant liquide (40) pour une chambre de combustion (12') sont agencés en un seul injecteur de carburant liquide (50) présentant des canaux de carburant séparés l'un de l'autre, et **en ce que** les premier et second systèmes d'admission en carburant liquide (20, 40) partagent une source de carburant commune (52).

2. Système de carburant pour un moteur à pistons à combustion interne fonctionnant à l'essence selon la revendication 1, **caractérisé en ce que** le premier système d'alimentation en carburant liquide (20) et le second système d'alimentation en carburant liquide (40) comprennent des systèmes de rails (23, 43) communs dédiés, pouvant être commandés séparément.

3. Système de carburant pour un moteur à pistons à combustion interne fonctionnant à l'essence selon la revendication 2, **caractérisé en ce que** le premier système d'alimentation en carburant liquide et le second système d'alimentation en carburant liquide comprennent une pompe commune (46'), un dispositif de commande (64) et un système de commande (56) agencés pour maintenir la pression du carburant dans le système de rails commun (23) à une première valeur réglée, et dans le second système de rails commun (43) à une seconde valeur réglée.

4. Système de carburant pour un moteur à pistons à combustion interne fonctionnant à l'essence selon la revendication 3, **caractérisé en ce que** le premier système de rails commun comprend une pompe (26) et/ou un système de commande (56) agencé(e)(s) pour maintenir la pression du carburant dans le premier système de rail commun à une première valeur réglée.

5. Système de carburant pour un moteur à pistons à combustion interne fonctionnant à l'essence selon la revendication 3, **caractérisé en ce que** le second système de rails commun comprend une pompe (46) et/ou un système de commande (56) agencé(e)(s) pour maintenir la pression du carburant dans le second système de rail à une seconde valeur réglée.

6. Système de carburant pour un moteur à pistons à combustion interne fonctionnant à l'essence selon l'une quelconque des revendications 3 - 5, **caractérisé en ce que** le système de carburant comprend un système de commande (56) agencé pour maintenir la pression du carburant dans le second système de rails commun à une seconde valeur préréglée qui est le double de la première valeur réglée.

7. Système de carburant pour un moteur à pistons à combustion interne fonctionnant à l'essence selon la revendication 1, **caractérisé en ce que** le premier système d'alimentation en carburant liquide comprend un système de rails commun (23) et le second système d'alimentation en carburant liquide comprend une buse hydro-mécanique (43) comprenant une aiguille de buse contrainte par ressort qui peut être ouverte en appliquant une force de pression de carburant contre le ressort poussant l'aiguille en direction de sa position fermée, et une pompe d'injection à saccade dédiée (47).

8. Système de carburant pour un moteur à pistons à combustion interne fonctionnant à l'essence selon la revendication 1, **caractérisé en ce que** les premier et second systèmes d'admission de liquide sont branchés sur la source de carburant commune (52).

9. Système de carburant pour un moteur à pistons à combustion interne fonctionnant à l'essence selon la revendication 1, **caractérisé en ce que** les premier et second systèmes d'admission de liquide sont adaptés pour fonctionner avec du mazout lourd.

10. Système de carburant pour un moteur à pistons à combustion interne fonctionnant à l'essence selon la revendication 1, **caractérisé en ce que** les systèmes d'admission de carburant comprennent une buse ayant une soupape à aiguille dans laquelle une aiguille est dotée d'une partie de section de guidage (43) présentant une surface extérieure cylindrique, et **en ce que** la surface extérieure est dotée d'une rainure s'étendant radialement (2).

11. Système de carburant pour un moteur à pistons à combustion interne fonctionnant à l'essence selon la revendication 10, **caractérisé en ce que** la section de guidage d'aiguille est dotée d'au moins une microrainure (2) filetée.

12. Système de carburant pour un moteur à pistons à combustion interne fonctionnant à l'essence selon la revendication 10, **caractérisé en ce que** la section de guidage est dotée d'au moins une microrainure (2) filetée double.

13. Système de carburant pour un moteur à pistons à combustion interne fonctionnant à l'essence selon la revendication 10, **caractérisé en ce que** la section de guidage est dotée d'une rainure (2) de circonscription radiale avec une microrainure de liaison longitudinale.

14. Système de carburant pour un moteur à pistons à combustion interne fonctionnant à l'essence selon la revendication 10, **caractérisé en ce que** la section de guidage est dotée d'une microrainure (2) à contre-filet.

15. Système de carburant pour un moteur à pistons à combustion interne fonctionnant à l'essence selon l'une quelconque des revendications 10 - 14, **caractérisé en ce que** la microrainure (2) présente une profondeur L de 15 - 20 µm et qu'il y a un écart W entre la surface extérieure et la cavité cylindrique dans laquelle elle est montée de 3 - 5 µm.
